# EUROPEAN PATENT APPLICATION

(11) **EP 2 172 846 A1**
(43) Date of publication of application: **07.04.2010**
(21) Application number: 08790967.7
(22) Date of filing: 08.07.2008
(51) Int. Cl.: G06F 13/00, H04L 12/56

(54) **NETWORK SYSTEM, NODE DEVICE, DATA DISTRIBUTION METHOD, INFORMATION RECORDING MEDIUM, AND PROGRAM**

(30) Priority: 20.07.2007 JP 2007189149
(71) Applicant: Konami Digital Entertainment Co., Ltd., Tokyo 107-8324 (JP)
(72) Inventor: MORI, Shoji, Tokyo 107-8324 (JP)
(74) Representative: Jakubczyk, Adam Rafael
(86) International application number: PCT/JP2008/062330
(87) International publication number: WO 2009/013999

(57) **Abstract**

A distribution request sending unit (301) sends a distribution request to a server. When a terminal (12) is selected by the server as a highest-level node and introduced by the server to other nodes, a routing unit (302) of the selected terminal determines a distribution route among these nodes such that the route goes from higher-level to lower-level nodes, starting from the selected terminal. A data receiving unit (303) receives data distributed by an immediate higher-level node, to which it gains connection in accordance with the determined distribution route. A data sending unit (308) connects to an immediate lower-level node in the distribution route if such a node exists, and sends the received data there. In the case of a lowest-level node, its receipt acknowledge returning unit (309) returns a receipt acknowledge for the data received by the data receiving unit (303) to the highest-level node upon the data reception.

## Description

### Technical Field

The present invention relates to a network system, a node device, a data distribution method, an information recording medium, and a program that can appropriately reduce a load in data distribution.

### Background Art

Conventionally, various kinds of data have been provided via networks such as the Internet. For example, game companies, etc. distribute evaluation version programs (i.e., promotional programs allowing a game play in a limited range), etc. to let users experience games before release, etc. Other than these, game companies distribute programs for modifying existing games, libraries, etc.
Specifically, the game companies store evaluation version programs and the like to be distributed in their servers and allow users to freely download the programs using their own game devices, etc.

In the technical field of this kind, there have also been disclosed techniques that allow downloading and using modification programs, libraries, etc. without rebooting a game device or interrupting a play (e.g., see Patent Literature 1).
Patent Literature 1: Unexamined Japanese Patent Application KOKAI Publication No. 2004-287631 (pp. 10-16, Fig. 1)

### Disclosure of Invention

### Problem to be Solved by the Invention

Conventional data distribution as described above may sometimes impose an intensive load on the server, resulting in insufficient distribution.
For example, when there is an announcement that distribution of an evaluation version program has started, many users rush to download the program at the same time, putting an intensive load on the server. This would cause situations that downloading totally does not start, or downloading does start but takes a long time before completion.
Hence, the data providers (i.e., game companies, etc.) have employed a common load balancing technique such as using a plurality of servers to distribute a load among the servers, to enable users to download data without waiting that long.

However, for example, distribution of a game (evaluation version program) that attracts much attention from users is likely to encounter a situation that much more users try to download the game at the same time. In this situation, the use of an existing load balancing technique does not produce efficient distribution because of an excessive load above an acceptable range.
Therefore, there has been a demand for a new method that can reduce a load in data distribution.

The present invention was made to solve the problem and an object of the present invention is to provide a network system, a node device, a data distribution method, an information recording medium, and a program that can appropriately reduce a load in data distribution.

### Means for Solving the Problem

A network system according to a first aspect of the present invention is a network system, in which a server and a plurality of node devices are capable of communicating with one another, and the server includes a distribution request receiving unit, a selecting unit, an introducing unit, and a distributing unit, while each node device includes a distribution request sending unit, a routing unit, a data receiving unit, a data sending unit, and a receipt acknowledge returning unit.

First, the operation of the server will be explained. The distribution request receiving unit receives a distribution request sent by the node devices. The selecting unit selects at least one of the node devices which have sent the distribution request as a highest-level node device. The introducing unit introduces the highest-level node device to each of the other node devices that arc not selected. The distributing unit distributes data to the highest-level node device.

The operation of each node device will now be explained. The distribution request sending unit sends a distribution request to the server. When the node device in question is selected by the server as the highest-level node device and hence introduced by the server to the other node devices, the routing unit determines a distribution route among these other node devices such that the distribution route goes from higher-level node devices to lower-level node devices, starting from the node device in question.
The data receiving unit receives the data distributed by an immediate higher-level node device, to which the node device in question gains connection in accordance with the determined distribution route, or the data distributed by the server. In a case where the node device in question has an immediate lower-level node device, to which the node device shall gain connection in accordance with the distribution route, the data sending unit sends the received data to the immediate lower-level node device. In a case where the node device in question is a lowest-level node device as having no immediate lower-level node device in the distribution route, the receipt acknowledge returning unit returns a receipt acknowledge for the data that is received by the data receiving unit to the highest-level node device, upon reception of the data.

As described above, the server selects a highest-level node device and distributes data to the selected node device. Meanwhile, when the highest-level node device determines a distribution route that starts from itself, the node devices perform data distribution such that the distribution proceeds along the determined route from higher-level node devices to lower-level node devices in a bucket brigade manner.
Accordingly, unlike conventional, the server will not be intensively loaded in data distribution, with the load distributed appropriately among the node devices.
Hence, it is possible to appropriately reduce a load in data distribution.

The selecting unit of the server may select the node device that has sent the distribution request first as the highest-level node device.
The routing unit of the highest-level node device may determine the distribution route among the other node devices, which, via introduction by the server, have accessed the node device, such that the distribution route goes from higher-level node devices to lower-level node devices, where the level of the node devices is determined in accordance with the order of access.
In this case, it is possible to determine the distribution route quite naturally, and at the same time to simplify the process for determining the route.

Each node device may further include:
an address adding unit that adds an address of the node device in question to the data received by the data receiving unit; and
a higher-level node managing unit that manages higher-level node devices that are currently higher in level than the node device in question based on addresses that have already been added to the received data.
The data sending unit may send the data, to which the address has been added, to the immediate lower-level node device.
The receipt acknowledge returning unit may generate a list that includes all the addresses that have been added to the data received by the data receiving unit and the address of the node device in question in such a manner that the list indicates a currently existing distribution route, and return the receipt acknowledge that includes the generated list to the highest-level node device.
In this case, the highest-level node device can be notified that distribution has arrived at the lowest-level node device, and of the (latest) distribution route that has existed at the time distribution arrived there.

Each node device may further include a redistribution requesting unit that, when the data receiving unit becomes unable to receive data because the node device in question is disconnected from the immediate higher-level node device, tries to gain connection to the higher-level node devices managed by the higher-level node managing unit in an order of lower-level ones of the managed node devices, and requests the node device, to which it has succeeded in gaining connection, to redistribute the data.
The data receiving unit may regard the node device, which the redistribution requesting unit has requested to redistribute the data, as a new immediate higher-level node device, and receive the data distributed by the new immediate higher-level node device.
In this case, it is possible to restructure the distribution route autonomously and to appropriately continue data distribution.

When the highest-level node device is accessed by a new node device via introduction by the server, the routing unit of the node device may re-determine a distribution route, in which the new node device is a lowest-level node device.
In this case, it is possible to appropriately perform data distribution that involves a node device that is to join the data distribution in the middle.

A node device according to a second aspect of the present invention is one of a plurality of node devices in a network, in which a server as a data distribution source and the plurality of node devices are capable of communicating one another. Each node device includes a distribution request sending unit, a routing unit, a data receiving unit, a data sending unit, and receipt acknowledge returning unit.

First, the distribution request sending unit sends a distribution request to the server. When the node device in question is selected by the server as a highest-level node device and introduced by the server to the other node devices, the routing unit determines a distribution route among these other node devices such that the distribution route goes from higher-level node devices to lower-level node devices, starting from the node device in question. The data receiving unit receives data distributed by an immediate higher-level node device, to which the node device in question gains connection in accordance with the determined distribution route, or data distributed by the server. In a case where the node device in question has an immediate lower-level node device, to which the node device shall gain connection in accordance with the distribution route, the data sending unit sends the received data to the immediate lower-level node device. In a case where the node device in question is a lowest-level node device as having no immediate lower-level node device in the distribution route, the receipt acknowledge returning unit returns a receipt acknowledge for the data that is received by the data receiving unit to the highest-level node device, upon reception of the data.

As described above, when the highest-level node device determines a distribution route that starts from itself, the node devices perform data distribution such that the distribution proceeds along the determined route from higher-level node devices to lower-level node devices in a bucket brigade manner.
Accordingly, unlike conventional, the server will not be intensively loaded in data distribution, with the load distributed appropriately among the node devices.
Hence, it is possible to appropriately reduce a load in data distribution.

Each node device may be selected as the highest-level node device when it has sent the distribution request first.
The routing unit of the highest-level node device may determine the distribution route among the other node devices, which, via introduction by the server, have accessed the node device, such that the distribution route goes from higher-level node devices to lower-level node devices, where the level of the node devices is determined in accordance with the order of access.
In this case, it is possible to determine the distribution route quite naturally, and at the same time to simplify the process for determining the route.

Each node device may further include:
an address adding unit that adds an address of the node device in question to the data received by the data receiving unit; and
a higher-level node managing unit that manages higher-level node devices that are currently higher in level than the node device in question based on addresses that have already been added to the received data.
The data sending unit may send the data, to which the address has been added, to the immediate lower-level node device.
The receipt acknowledge returning unit may generate a list that includes all the addresses that have been added to the data received by the data receiving unit and the address of the node device in question in such a manner that the list indicates a currently existing distribution route, and return the receipt acknowledge that includes the generated list to the highest-level node device.
In this case, the highest-level node device can be notified that distribution has arrived at the lowest-level node device, and of the (latest) distribution route that has existed at the time distribution arrived there.

Each node device may further include a redistribution requesting unit that, when the data receiving unit becomes unable to receive data because the node device in question is disconnected from the immediate higher-level node device, tries to gain connection to the higher-level node devices managed by the higher-level node managing unit in an order of lower-level ones of the managed node devices, and requests the node device, to which it has succeeded in gaining connection, to redistribute the data.
The data receiving unit may regard the node device, which the redistribution requesting unit has requested to redistribute the data, as a new immediate higher-level node device, and receive the data distributed by the new immediate higher-level node device.
In this case, it is possible to restructure the distribution route autonomously and to appropriately continue data distribution.

When the highest-level node device is accessed by a new node device via introduction by the server, the routing unit of the node device may re-determine a distribution route, in which the new node device is a lowest-level node device.
In this case, it is possible to appropriately perform data distribution that involves a node device that is to join the data distribution in the middle.

A data distribution method according to a third aspect of the present invention is a data distribution method of a network system in which a server and a plurality of node devices are capable of communicating one another. The method includes a distribution request receiving step, a selecting step, an introducing step, a distributing step, a distribution request sending step, a routing step, a data receiving step, a data sending step, and a receipt acknowledge returning step.

First, at the distribution request receiving step, the server receives a distribution request sent by the node devices. At the selecting step, the server selects at least one of the node devices which have sent the distribution request as a highest-level node device. At the introducing step, the server introduces the highest-level node device to the other node devices that are not selected. At the distributing step, the server distributes data to the highest-level node device.

Meanwhile, at the distribution request sending step, each node device sends a distribution request to the server. At the routing step, any node device that is selected by the server as the highest-level node device and hence introduced to the other node devices determines a distribution route among these other node devices such that the distribution route goes from higher-level node devices to lower-level node devices, starting from the highest-level node device. At the data receiving step, each node device receives the data distributed by an immediate higher-level node, to which the node device gains connection in accordance with the determined distribution route, or the data distributed by the server. At the data sending step, each node device that has an immediate lower-level node device, to which it shall gain connection in accordance with the distribution route, sends the received data to the immediate lower-level node device. At the receipt acknowledge returning step, any node device that is the lowest-level node device as having no immediate lower-level node device in the distribution route returns a receipt acknowledge for the data received by its data receiving unit to the highest-level node device, upon reception of the data.

As described above, the server selects a highest-level node device and distributes data to the selected node device. Meanwhile, when the highest-level node device determines a distribution route that starts from itself, the node devices perform data distribution such that the distribution proceeds along the determined route from higher-level node devices to lower-level node devices in a bucket brigade manner.
Accordingly, unlike conventional, the server will not be intensively loaded in data distribution, with the load distributed appropriately among the node devices.
Hence, it is possible to appropriately reduce a load in data distribution.

An information recording medium according to a fourth aspect of the present invention stores a program that controls a computer (including an electronic device) to function as the node device described above.

A program according to a fifth aspect of the present invention controls a computer (including an electronic device) to function as the node device described above.

The program may be recorded on a computer-readable information recording medium such as a compact disk, a flexible disk, a hard disk, a magneto-optical disk, a digital video disk, a magnetic tape, a semiconductor memory, etc.

The program may be distributed or sold via a computer communication network independently from a computer on which the program is executed. The information recording medium may be distributed or sold independently from the computer.

### Effect of the Invention

The present invention can appropriately reduce a load in data distribution.

### Brief Description of Drawings

[Fig. 1] Fig. 1 is an exemplary diagram showing a schematic configuration of a network system according to an embodiment of the present invention.
[Fig. 2] Fig. 2 is an exemplary diagram showing a schematic configuration of a game device according to an embodiment of the present invention.
[Fig. 3] Fig. 3 is an exemplary diagram showing an example of a schematic configuration of a server.
[Fig. 4] Fig. 4 is an exemplary diagram showing an example of a schematic configuration of a terminal.
[Fig. 5A] Fig. 5A is an exemplary diagram explaining a typical distribution route.
[Fig. 5B] Fig. 5B is an exemplary diagram explaining how a distribution route is determined.
[Fig. 6A] Fig. 6A is an exemplary diagram explaining the structure of data to be distributed.
[Fig. 6B] Fig. 6B is an exemplary diagram explaining a header portion, etc. included in data to be distributed.
[Fig. 7] Fig. 7 is an exemplary diagram explaining an example of a higher-level node table.
[Fig. 8] Fig. 8 is a flowchart showing an example of a distribution request receiving process according to an embodiment of the present invention.
[Fig. 9] Fig. 9 is a flowchart showing an example of a distribution route determining process according to an embodiment of the present invention.
[Fig. 10] Fig 10 is a flowchart showing an example of a redistribution requesting process according to an embodiment of the present invention.
[Fig. 11A] Fig. 11A is an exemplary diagram explaining branching distribution routes.
[Fig. 11B] Fig. 11B is an exemplary diagram explaining how distribution routes are determined.

### Explanation of Reference Numerals

- 10: network system
- 11: server
- 12: terminal
- 13: Internet
- 100: game device
- 101: CPU
- 102: ROM
- 103: RAM
- 104: interface
- 105: controller
- 106: external memory
- 107: DVD-ROM drive
- 108: image processing unit
- 109: sound processing unit
- 110: NIC
- 201: distribution request receiving unit
- 202: selecting unit
- 203: node information storage unit
- 204: introducing unit
- 205: distributing unit
- 206: distribution data storage unit
- 301: distribution request sending unit
- 302: routing unit
- 303: data receiving unit
- 304: distributed data storage unit
- 305: address adding unit
- 306: higher-level node managing unit
- 307: redistribution requesting unit
- 308: data sending unit
- 309: receipt acknowledge returning unit

### Best Mode for Carrying Out the Invention

Embodiments of the present invention will be described below. For ease of understanding, the embodiments below of the present invention are described as applications to game devices that can connect to a server and the like via a network. However, the present invention may be similarly applied to information processing devices, such as various computers, PDAs, or mobile phones. In other words, the embodiments described below are provided to give explanations, not to limit the scope of the present invention. Therefore, those skilled in the art can adopt embodiments in which some or all of the elements herein have been replaced with respective equivalents, and such embodiments are also to be included within the scope of the present invention.

### (Embodiment 1)

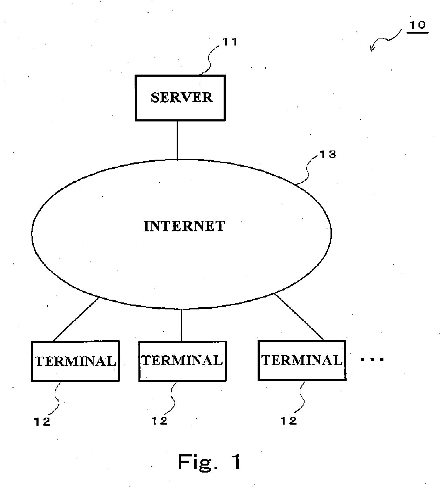

Fig. 1 is an exemplary diagram showing a schematic configuration of a network system according to an embodiment of the present invention. The following explanation will be given with reference to this diagram.

The present network system 10 includes, for example, a server 11 for data distribution, which exists on Internet 13. In the network system 10, terminals 12 are connected with the server 11 or other terminals 12 via the Internet 13 to be able to communicate with each other.
The server 11 is capable of distributing, for example, an evaluation version program and allows each terminal 12 to directly or indirectly download the program. The terminals 12 can communicate with each other via a so-called peer-to-peer communication technique.
For facilitating understanding of the invention, the following explanation will take up an Internet connectable game device as an example of the terminals 12.

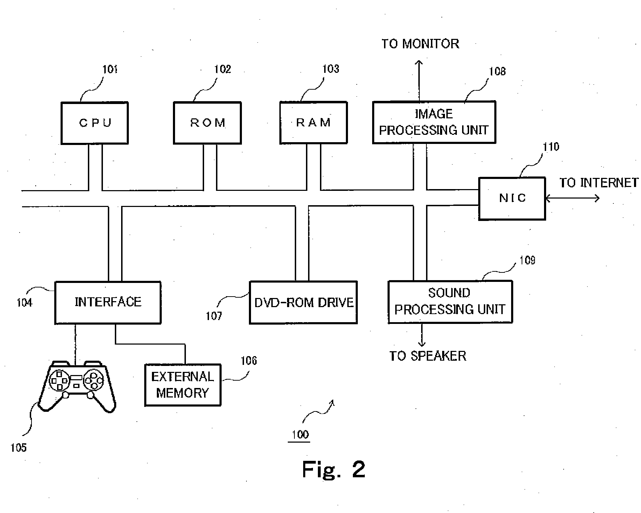

Fig. 2 is an exemplary diagram showing a schematic configuration of a game device 10, which functions as the terminal 12 (i.e., a node device) according to the present embodiment. The following explanation will be given with reference to this diagram.

The game device 100 includes a Central Processing Unit (CPU) 101, a Read Only Memory (ROM) 102, a Random Access Memory (RAM) 103, an interface 104, a controller 105, an external memory 106, a Digital Versatile Disk (DVD)-ROM drive 107, an image processing unit 108, a sound processing unit 109, and a Network Interface Card (NIC) 110.

When a DVD-ROM that stores a game program and data is inserted to the DVD-ROM drive 107 and the game device 100 is turned on, the program is executed and the node device according to the present embodiment is realized.

The CPU 101 controls the entire operation of the game device 100, and is connected to each component to exchange control signals and data with it.

An Initial Program Loader (IPL), which is executed immediately after the power is turned on, is stored in the ROM 102, and when executed, makes a program stored on the DVD-ROM be read into the RAM 103 and executed by the CPU 101. Further, an operating system program and various data that are necessary for controlling the operation of the whole game device 100 arc stored in the ROM 102.

The RAM 103 is a temporary memory for data and programs, and retains a program and data read out from the DVD-ROM and data necessary for game proceeding and chat communications.

The controller 105 connected via the interface 104 receives an operation input given by a user for playing a game. For example, the controller 105 receives an input of a letter string (message), etc. in response to an operation input.

The external memory 106 detachably connected via the interface 104 rewritably stores data representing a progress status of a game, log (record) data of chat communications, etc. As needed, a user can record such data into the external memory 106 by entering an instruction input via the controller 105.

A DVD-ROM to be mounted on the DVD-ROM drive 107 stores a program for realizing a game and image data and sound data that accompany the game. Under the control of the CPU 101, the DVD-ROM drive 107 performs a reading process to the DVD-ROM mounted thereon to read out a necessary program and data, which are to be temporarily stored in the RAM 103, etc.

The image processing unit 108 processes data read out from a DVD-ROM by means of the CPU 101 and an image calculation processor (unillustrated) possessed by the image processing unit 108, and records the processed data in a frame memory (unillustrated) possessed by the image processing unit 108. Image information recorded in the frame memory is converted to video signals at predetermined synchronization timings and output to a monitor (unillustrated) connected to the image processing unit 108. This enables various types of image display.

The image calculation processor can perform, at a high speed, overlay calculation of two-dimensional images, transparency calculation such as α blending, etc., and various saturation calculations.
The image calculation processor can perform a high-speed calculation of rendering polygon information that is disposed in a virtual three-dimensional space and affixed with various texture information by Z buffering and obtaining a rendered image of the polygon disposed in the virtual three-dimensional space as seen from a predetermined view position.

Furthermore, the CPU 101 and the image calculation processor can work in cooperation to depict a string of letters as a two-dimensional image in the frame memory or on a surface of a polygon in accordance with font information that defines the shape of the letters. The font information is stored in the ROM 102, but dedicated font information stored in a DVD-ROM may be used.

The sound processing unit 109 converts sound data read out from a DVD-ROM into an analog sound signal and outputs it from a speaker (unillustrated) connected thereto. Further, under the control of the CPU 101, the sound processing unit 109 generates a sound effect or music data that shall be released in the progress of a game, and outputs a sound corresponding to the data from the speaker.

The NIC 110 connects the game device 100 to a computer communication network (unillustrated) such as the Internet, etc. The NIC 110 is constituted by a 10BASE-T/100BASE-T product used for building a Local Area Network (LAN), an analog modem, an Integrated Services Digital Network (ISDN) modem, or an Asymmetric Digital Subscriber Line (ADSL) modem for connecting to the Internet via a telephone line, a cable modem for connecting to the Internet via a cable television line, or the like, and an interface (unillustrated) that intermediates between any of these and the CPU 101.

The game device 100 may use a large capacity external storage device such a hard disk or the like and configure it to serve the same function as the ROM 102, the RAM 103, the external memory 106, a DVD-ROM mounted on the DVD-ROM drive 107, or the like.
It is also possible to employ an embodiment in which a keyboard for receiving an input for editing a text string from a user, a mouse for receiving a position designation or a selection input of various kinds from a user, etc. are connected.

An ordinary computer (general-purpose personal computer or the like) may be used instead of the game device 100 according to the present embodiment as the node device. For example, an ordinary computer includes, likewise the game device 100 described above, a CPU a RAM, a ROM, a DVD-ROM drive, and an NIC, an image processing unit with simpler capabilities than those of the game device 100, and a hard disk as its external storage device with also compatibility with a flexible disk, a magneto-optical disk, a magnetic tape, etc. Such a computer uses a keyboard, a mouse, etc. instead of a controller as its input device. When a game program is installed on the computer and executed, the computer functions as the node device.

### (Schematic Configuration of the Server)

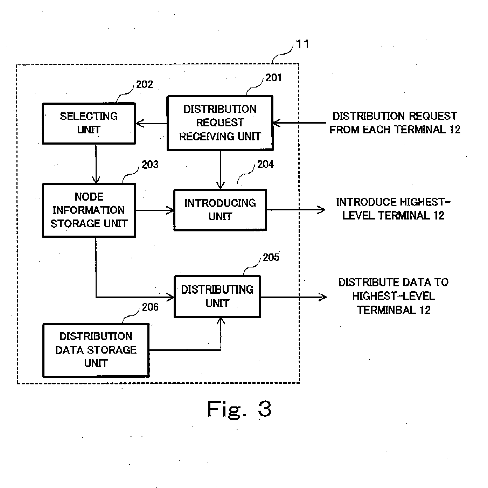

Fig. 3 is an exemplary diagram showing an example schematic configuration of the server 11 according to the present embodiment. The following explanation will be given with reference to this diagram.

As shown in Fig. 3, the server 11 includes a distribution request receiving unit 201, a selecting unit 202, a node information storage unit 203, an introducing unit 204, a distributing unit 205, and a distribution data storage unit 206.

The distribution request receiving unit 201 receives a distribution request that is sent by each terminal 12, which functions as a node device (hereinafter abbreviated as "node").
For example, when any terminal 12 requests downloading by designating an arbitrary evaluation version program, the distribution request receiving unit 201 receives a distribution request for the evaluation version program.

The selecting unit 202 selects at least one of the terminals 12 which have sent a distribution request as the highest-level node.
For example, the selecting unit 202 selects the terminal 12 that has sent the earliest one of some distribution requests designating the same evaluation version program as the highest-level node. Then, the selecting unit 202 stores identification information (e.g., a MAC address or the like) of the selected terminal 12 and an address (e.g., an IP address or the like) at which the selected terminal 12 can be accessed in the node information storage unit 203.

The node information storage unit 203 stores information regarding the terminal 12 selected as the highest-level node.
For example, the node information storage unit 203 stores identification information (a MAC address or the like) and an address (an IP address or the like) of the selected terminal 12 in association with the evaluation version program designated in the distribution request.

The introducing unit 204 introduces the selected terminal 12 (i.e., the highest-level node) to each of the other selected terminals 12, upon receiving a distribution request from them.
Specifically, the introducing unit 204 refers to the node information storage unit 203 and determines whether or not there is stored information (highest-level node information) regarding a terminal 12 that is associated with the evaluation version program designated in the distribution request. In a case where there is stored information regarding such a terminal 12, which means that a highest-level node has already been selected, the introducing unit 204 introduces the highest-level node by sending back the stored information (addresses, etc.)
In a case where there is no highest-level node information stored, the selecting unit 202 described above selects a terminal that is to be the highest-level node.

The distributing unit 205 distributes data to the highest-level node terminal 12 (i.e., the selected terminal 12).
For example, the distributing unit 205 connects a distribution session to the highest-level node, reads out the target evaluation version program from the distribution data storage unit 206, and distributes it to the node.
When distributed, the evaluation version program is divided (fragmented) into a predetermined block size and sent block by block.

The distribution data storage unit 206 stores data of various evaluation version programs, etc. that may be provided to users (specifically, the terminals 12).

### (Schematic Configuration of the Terminals Functioning as a Node)

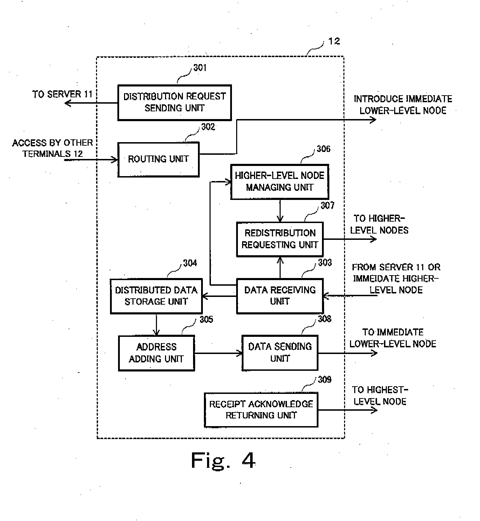

Fig. 4 is an exemplary diagram showing an example schematic configuration of the terminals 12 according to the present embodiment. The following explanation will be given with reference to this diagram.

As shown in Fig. 4, each terminal 12 includes a distribution request sending unit 301, a routing unit 302, a data receiving unit 303, a distributed data storage unit 304, an address adding unit 305, a higher-level node managing unit 306, a redistribution requesting unit 307, a data sending unit 308, and a receipt acknowledge returning unit 309.

The distribution request sending unit 301 sends a distribution request to the server 11.
For example, when a user operating the terminal 12 designates an arbitrary evaluation version program, the distribution request sending unit 301 sends a distribution request for the designated evaluation version program to the server 11.
The NIC 110 described above can function as the distribution request sending unit 301.

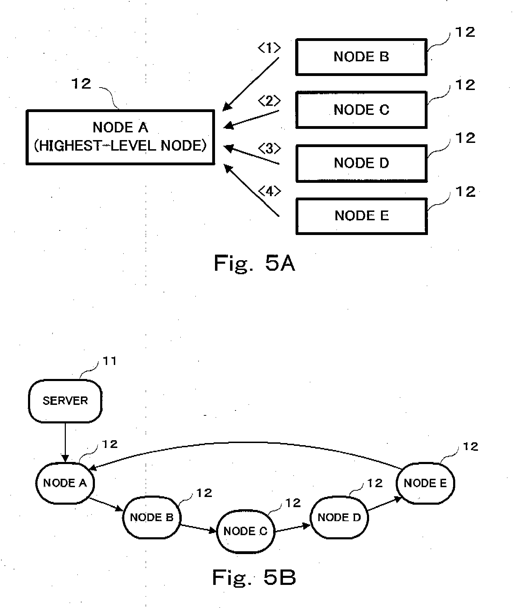

The routing unit 302 serves a function of determining a distribution route among the terminals 12, when the terminal 12, to which it belongs, is selected by the server 11 as the highest-level node.
For example, the routing unit 302 determines a distribution route among other terminals 12, to which the terminal 12 to which it belongs has been introduced, such that the route goes down from higher-level terminals to lower-level ones, starting from the terminal 12 to which it belongs.
Specifically, when the highest-level node A is accessed by nodes B to E in this order via introduction by the server 11 as shown in Fig. 5A, the routing unit 302 of the node A determines a distribution route as shown in Fig. 5B.

That is, the node A (the routing unit 302) designates the node B, which has accessed first via introduction, as its immediate lower-level node. Then, the node A introduces the node B to the nodes C to E, which have accessed subsequently. The nodes C to E shall hence access the node B.
The node B appoints the node C, which has accessed itself first via introduction, as its immediate lower-level node, and introduces the node C to the nodes D and E, which have accessed subsequently. Hence, the nodes D and E shall access the node C.
Then, the node C designates the node D, which has accessed itself first, as its immediate lower-level node, and introduces the node D to the node E, which has accessed subsequently. Hence, the node E shall access the node D.
Lastly, the node D designates the node E, which has accessed itself, as its immediate lower-level node.

In accordance with the distribution route determined in this manner, each node connects a distribution session to its immediate higher-level node and to its immediate lower-level node.
For example, the node C shown in Fig. 5B will hold a session with its immediate higher-level node B and with its immediate lower-level node D. The node E will hold a session with its immediate higher-level node D likewise, but as the lowest-level node, will hold a session with the highest-level node A for receipt acknowledgement, which will be described later.
The CPU 101, etc. described above can function as the routing unit 302.

Returning to Fig. 4, the data receiving unit 303 receives data that is distributed by its immediate higher-level node, to which it connects in accordance with the distribution route determined by the routing unit 302. Note that the data receiving unit 202 of the terminal 12, which is the highest-level node, receives data that is distributed directly by the server 11.
The data receiving unit 303 sequentially stores the received data in the distributed data storage unit 304.
The NIC 110 described above can function as the data receiving unit 303.

The distributed data storage unit 304 stores the data received by the data receiving unit 303.
As described above, the evaluation version program is distributed dividedly in a predetermined block size. Therefore, the distributed data includes information necessary for restoring the original evaluation version program.
The distributed data storage unit 304 sequentially stores the data distributed in this manner, and stores the restored version of the evaluation version program after all the data (all the blocks) are acquired.
The RAM 103 and the external memory 106 described above can function as the distributed data storage unit 304.

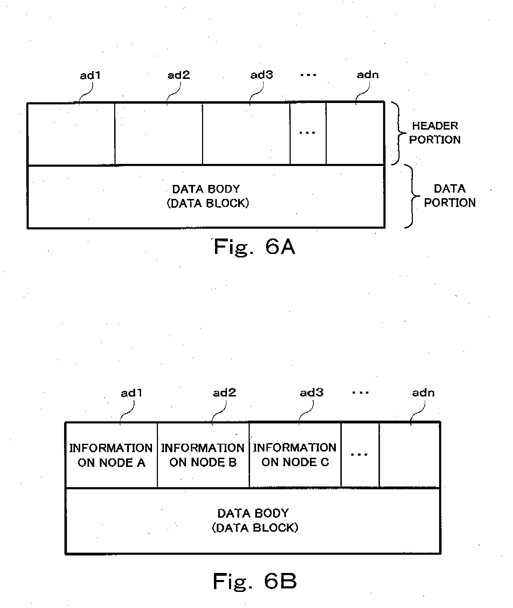

The address adding unit 305 adds a node-specific address, etc. to the data received by the data receiving unit 303.
Specifically, as shown in Fig. 6A, data to be distributed includes a data body (data portion) and a header portion. The header portion is divided into a predetermined number of areas (ad1 to adn), into which the nodes can add their own information such as their addresses respectively.
Therefore, the address adding unit 305 searches the header portion from its top area (ad1) to its tail (adn) for an empty area, and sets the node-specific address (e.g., an IP address or the like) and the node-specific identification information (a MAC address or the like) in the empty area that is found first.
That is, since each node finds an empty area of the header portion and adds its own addresses, etc. when it receives data, the areas of the header portion will be filled in an order from the top area in line with the order of the actual distribution route as shown in Fig. 6B.
The CPU 101, etc. described above can function as the address adding unit 305.

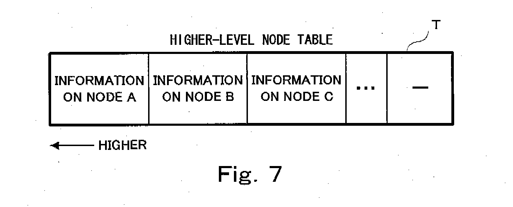

Returning to Fig. 4, the higher-level node managing unit 306 manages the terminals 12 that are currently higher in level than the node in question, based on the addresses, etc. added to the data (or its header portion) received by the data receiving unit 303.
For example, the higher-level node managing unit 306 reads out the addresses, etc. of the nodes added to the header portion as shown in Fig. 6B described above, and generates (or updates) a higher-level node table T as shown in Fig. 7. That is, the higher-level node managing unit 306 appropriately updates the higher-level node table T to manage the distribution route (or a node order) upstream of the node in question to constantly reflect the latest status. The higher-level node table T will be referred to in such cases where the node in question is disconnected from the session with its immediate higher-level node, as will be described later.
The CPU 101, the RAM 103, etc. described above can function as the higher-level node managing unit 306.

The redistribution requesting unit 307 requests redistribution of data by connecting to another higher-level node, in a case where the data receiving unit 303 becomes unable to receive data because of disconnection from the immediate higher-level node.
For example, the redistribution requesting unit 307 refers to the higher-level node table managed by the higher-level node managing unit 306, and tries to connect to any other higher-level node instead of the immediate higher-level node and requests any higher-level node, to which it has succeeded in connection, to redistribute data.
Specifically, when the node C disappears in a state that a distribution route as shown in Fig. 5B has been determined, the session between the node C and the node D will be disconnected (to be more specific, the session between the node B and the node C will also be disconnected). In this case, the redistribution requesting unit 307 of the node D refers to the higher-level node table T shown in Fig. 7 and tries to connect to the node B that is immediately higher than the node C. Then, in a case where the node D has succeeded in gaining connection, it requests the node B to redistribute the data. In a case where the node D has failed in gaining connection to the node B, it tries to connect to the node A that is still higher in level and requests the node A to redistribute the data if it succeeds in connecting to the node A.
The node that is requested by the redistribution requesting unit 307 to redistribute data will be a new immediate higher-level node.
The NIC 110 described above 110 can function as the redistribution requesting unit 307.

Returning to Fig. 4, the data sending unit 308 sends the data received by the node in question to the immediate lower-level node, to which connection has been gained in accordance with the determined distribution route.
That is, the data sending unit 308 distributes the data received by the data receiving unit 303 (to be more specific, the data to which the address adding unit 305 has added addresses, etc.) to the terminal 12 that is the immediate lower-level node.
Thereby, each node distributes data by passing down the data from its higher-level node to its lower-level node in a bucket brigade manner.
The data sending unit 308 of the lowest-level node does not send the data because there is no lower-level node.
The NIC 110 described above can function as the data sending unit 308.

The receipt acknowledge returning unit 309 functions when the terminal 12 in question, to which it belongs, becomes the lowest-level node; it returns a receipt acknowledge for the data received by the data receiving unit 303 to the highest-level node upon reception of the data.
For example, the receipt acknowledge returning unit 309 generates a list that indicates the entire distribution route that exists at the time, and returns a receipt acknowledge that includes the list to the terminal 12 that is the highest-level node.
Specifically, to explain the process in an example case in which the distribution route is as shown in Fig. 5B, the receipt acknowledge returning unit 309 of the lowest-level node E reads out the higher-level node table managed by the higher-level node managing unit 306, and generates a list, which is the read-out table to which the node-specific address, etc. of the node in question are added, i.e., a list that indicates the entire distribution route from the node A to the node E. Then, the receipt acknowledge returning unit 309 sends a receipt acknowledge that includes the generated list to the highest-level node A.
The CPU 101, the NIC 110, etc. described above can function as the receipt acknowledge returning unit 309.

### (Outline of the Operations of the Server and the Terminals)

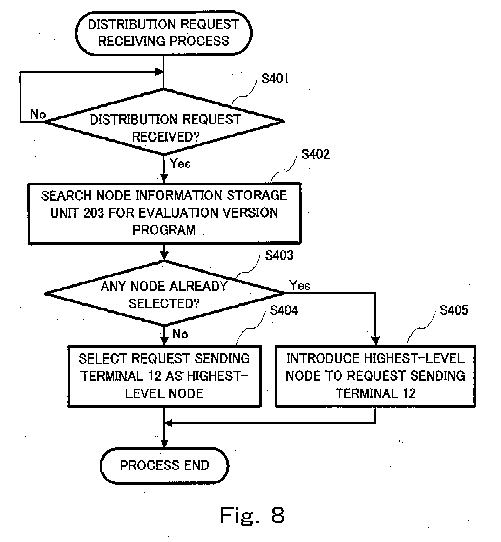

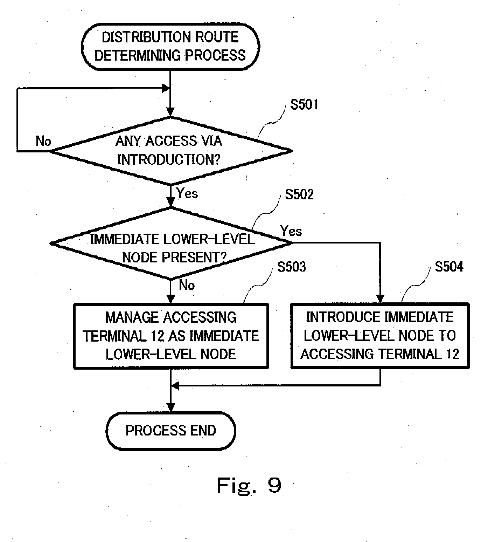

Fig. 8 is a flowchart showing the flow of a distribution request receiving process performed by the server 11 having the above-described configuration. Fig. 9 is a flowchart showing the flow of a distribution route determining process performed by each terminal 12. The operations of the sever 11 and each terminal 12 will be explained below with reference to these drawings.

First, the operation of the server 11 will be explained with reference to the distribution request receiving process of Fig. 8. The distribution data storage unit 206 of the server 11 stores evaluation version programs in a state ready to be distributed.
First, the server 11 stays on standby for performing subsequent steps until a distribution request is sent by any terminal 12 (step S401; No). That is, the server 11 waits until it receives a distribution request that designates an arbitrary evaluation version program.

Then, upon receiving a distribution request (step S401; Yes), the server 11 searches through the node information storage unit 203 for the evaluation version program that is designated in the distribution request (step S402).
That is, the server 11 searches for any node information that is associated with the designated evaluation version program.

The server 11 determines whether or not the highest-level node has already been selected (step S403). That is, the server 11 determines whether or not any node information that is associated with the designated evaluation version program is stored in the node information storage unit 203.
That is, the server 11 determines that the highest-level node has already been selected in a case where node information associated with the evaluation version program is stored, while determining that no highest-level node has been selected yet in a case where no associated information is stored.

When it is determined that no highest-level node has been selected (step S403; No), the server 11 selects the terminal 12 that has sent the distribution request as the highest-level node (step S404).
That is, the selecting unit 202 selects the terminal 12 that has first sent a distribution request for the evaluation version program in question as the highest-level node. Then, the selecting unit 202 stores the addresses, etc. of the selected terminal 12 in the node information storage unit 203.

On the other hand, in a case where it is determined that the highest-level node has already been selected (step S403; Yes), the server 11 introduces the highest-level node to the terminal 12 that has sent the distribution request (step S405).
That is, the introducing unit 204 returns the addresses, etc. of the terminal 12 that are recorded in the node information storage unit 203 to the request sending terminal 12, thereby introducing the highest-level node terminal 12 thereto.

Through this distribution request receiving process, upon receiving a distribution request, the server 11 selects the terminal 12 that has sent the request as the highest-level node in a case where no highest-level node terminal 12 has been selected. Meanwhile, in a case where the highest-level node terminal 12 has already been selected, the server 11 introduces the selected terminal 12 (the highest-level node) to the terminal 12 that has sent the request.
When distributing data, the server 11 needs only to distribute to the selected node device, resulting in being loaded less heavily.

Next, the operation of each terminal 12 (each node) will be explained with reference to the distribution route determining process of Fig. 9. The distribution route determining process may be performed before data distribution is started when a predetermined number of terminals 12 have entered, or may be performed after once a distribution route has been determined, at each time there is the necessity of letting a new terminal enter.

First, the terminal 12 stays on standby for performing subsequent steps until it is accessed by another terminal 12 via introduction (step S501; No). That is, the routing unit 302 waits for an access by another terminal 12 that is made via introduction by the server 11 or via introduction by any terminal 12 that is higher in level than the terminal 12 in question.
When there is an access via introduction (step S501; Yes), the terminal 12 determines whether or not there exists a node that is immediately lower in level than itself (step S502). That is, the routing unit 302 determines whether or not the terminal 12 is in the state of managing another terminal 12 as its immediate lower-level node.

In a case where it is determined that there exists no immediate lower-level node (step S502; No), the terminal 12 puts the accessing terminal 12 under its management as its immediate lower-level node (step S503).
That is, the routing unit 302 establishes a session with the accessing terminal 12 for data distribution, so that the terminal 12 in question can perform distribution, etc. to the accessing terminal 12.

On the other hand, in a case where it is determined that there exists an immediate lower-level node (step S502; Yes), the terminal 12 introduces the immediate lower-level node to the accessing terminal 12 (step S504).
That is, because there exist more than one nodes that are lower in level than the terminal 12 in question, the routing unit 302 introduces the immediate lower-level node of the terminal 12 in question to the accessing terminal 12 to let the accessing terminal 12 re-access the introduced node.

Through the distribution route determining process, any terminal 12 that has sent a distribution request last is bound to receive introduction of the highest-level terminal 12, of the terminal 12 that is lower (immediately lower) than the highest-level terminal 12, of the terminal 12 that is further lower, and so on, to finally become the lowest-level node and connect to the node that is higher itself by one level (immediately hither than itself).
When the distribution route is determined in this manner and each node becomes able to communicate, data distribution starts from higher-level nodes to lower-level nodes in accordance with the determined route in a bucket brigade manner.
Therefore, the server will not be intensively loaded in the data distribution, with the load appropriately distributed among the nodes.
Consequently, it is possible to avoid load concentration on the server 11 and appropriately reduce a load in data distribution.

### (Operation for when a Node has Disappeared)

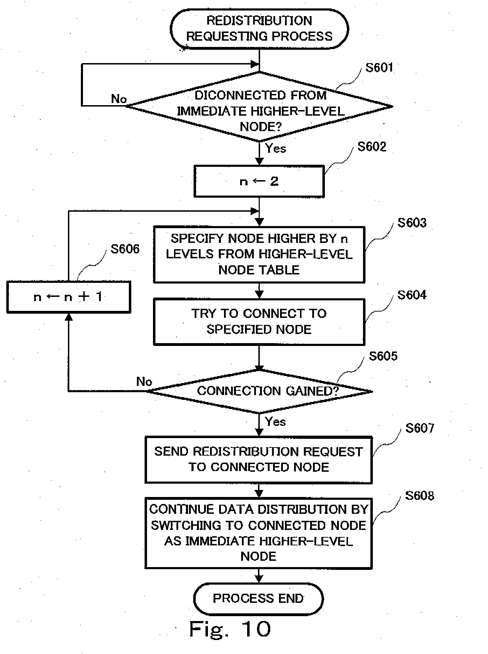

A node might possibly disappear for some reason in the midst of data distribution, which has been started as a distribution route has been determined through the distribution route determining process described above. For example, when any terminal 12 is disconnected off-line or switched off, the node of that terminal 12 will disappear.
In this case, unless the distribution route is restructured to do without the node that has disappeared, the nodes that are lower in level than the node that has disappeared will not be able to have the data distributed.
Therefore, the terminal 12 according to the embodiment of the present invention includes the redistribution requesting unit 307 described above, to be able to make data distribution appropriately continue even after any node has disappeared.
The operation of the terminal 12 for when a node has disappeared will be described below with reference to Fig. 10.
Fig. 10 is a flowchart showing the flow of a redistribution requesting process performed by each terminal 12. The redistribution requesting process will be performed, for example, in parallel with data distribution.

First, the terminal 12 determines at given intervals whether or not it has lost connection with its immediate higher-level node (step S601). For example, the redistribution requesting unit 307 monitors the reception condition of the data receiving unit 303 while data distribution is performed, and when the data receiving unit 303 becomes unable to receive, determines that the terminal 12 has lost connection with its immediate higher-level node.
Unless the terminal 12 has lost connection (step S601; No), the subsequent steps will not be performed.
On the other hand, in a case where it is determined that connection has been lost (step S601; Yes), the terminal 12 sets a variable "n" to its initial value of 2. The variable "n" designates a node that is higher than the terminal 12 in question by "n" levels.
That is, in a case where the variable "n" is 2, it designates the node that is higher than the terminal 12 in question by 2 levels, while in a case where the variable "n" is 3, it designates the node that is higher than the terminal 12 in question by 3 levels. Here, the case of the variable "n" being 1 is not in question because the variable having this value designates the node that is higher than the terminal 12 in question by 1 level, i.e., the immediate higher-level node.

Based on the value of the variable "n", the terminal 12 specifies the node that is higher than itself by "n" ("n" levels) from the higher-level node table (step S603).
Then, the terminal 12 tries to connect to the specified node (step S604). That is, the redistribution requesting unit 307 tries to connect to the node that is higher in level than the immediate higher-level node, with which the terminal 12 has lost connection.

The terminal 12 determines whether it has succeeded in connection (step S605). That is, the redistribution requesting unit 307 determines whether it has succeeded in establishing a distribution session with the specified higher-level node.

In a case where it is determined that the terminal 12 has failed in connection (step S605; No), the terminal 12 adds 1 to the variable "n" (step S606) and returns the flow to step S603.

On the other hand, in a case where it is determined that the terminal 12 has succeeded in connection (step S605; Yes), the terminal 12 sends a redistribution request to the node to which it has connected (step S607).
Then, switching to the node to which it has newly connected as its new immediate higher-level node, the terminal 12 continues the data distribution (step S608).
That is, the data receiving unit 303 receives data that is redistributed from the switched new immediate higher-level node, and then the data sending unit 308 distributes the received data with addresses, etc. added to the immediate lower-level node. That is, the node in question and its lower-level nodes will have the data distributed thereto with the addresses, etc. of the node that has disappeared omitted (not added). Therefore, the higher-level node managing unit 306 will accordingly update the higher-level node table to reflect the latest status.
Through the redistribution requesting process described above, the distribution route can be restructured autonomously when any node disappears halfway, so that data distribution can appropriately continue.

### (Another Embodiment)

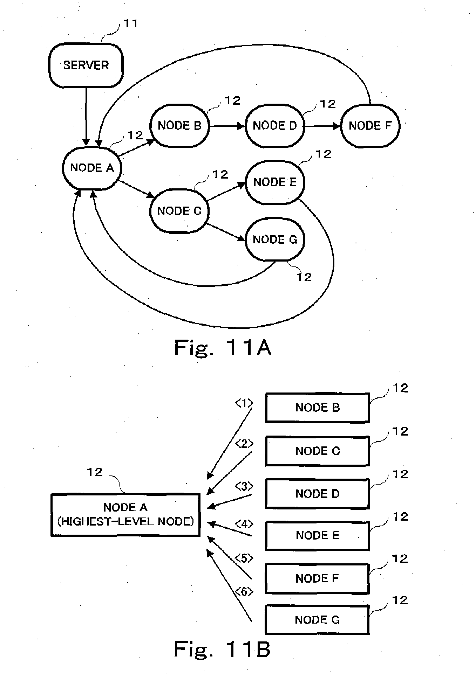

To facilitate the understanding of the invention, the above embodiment has explained, as an example, the simplest kind of a distribution route, which goes through the involved nodes in an order only once.
However, the distribution route may not necessarily be such simple, but may appropriately take different ways through the terminals 12 depending on the processing capacity of the terminals 12 or the communication capacity (communication rate, etc.) available between the terminals 12.
For example, if necessary, the present invention may also use a distribution route as shown in Fig. 11A, which goes branching. A specific explanation will be given below.

Before the distribution route is determined as shown in Fig. 11A, as well as the above case, the server 11 selects the highest-level node (which, in this case too, is the node A). Then, as shown in Fig. 11B, the highest-level node A is accessed by the nodes B to G in this order via introduction by the server 11.
The node A decides the number of nodes to be appointed as its immediate lower-level nodes based on the processing capacity, etc. (in this case, the number of nodes decided is 2), and designates the two nodes that have accessed first (in this case, the nodes B and C) as its immediate lower-level nodes. Then, the node A introduces either the node B or the node C to the nodes D to G that have accessed subsequently. For example, the node A may introduce the nodes B and C alternately. Hence, in this case, the node B will be introduced to the nodes D and F, and the node C will be introduced to the nodes E and G. The nodes D to G will access the introduced nodes respectively.

Likewise, when the node B decides the number of nodes to be appointed as its immediate lower-level nodes based on the processing capacity, etc. (in this case, the decided number is 1), it designates the node that has accessed itself first (in this case, the node D) as its immediate lower-level node. Then, the node B introduces the node D to the node F that has accessed itself subsequently.
Further in turn, the node D designates the node F that has accessed itself as its immediate lower-level node.

Lastly, when the node C decides the number of nodes to be appointed as its immediate lower-level nodes based on the processing capacity, etc. (in this case, the decided number is 2), it designates the two nodes that have accessed itself first (in this case, the nodes E and G) as its immediate lower-level nodes.
In accordance with the distribution route determined in this manner, the respective nodes connect a distribution session to their immediate higher-level node and to their immediate lower-level node.
Each of the nodes F, E, and G, which are the lowest-level nodes, will connect a session for receipt acknowledgement to the highest-level node A.

In the case of such branched distribution routes too, the data will be distributed along these routes (the branched routes) from higher-level nodes to lower-level nodes in a bucket brigade manner.
Consequently, it is possible to avoid load concentration on the server 11 and appropriately reduce a load in data distribution.

The present application claims priority to Japanese Patent Application No. 2007-189149, the content of which is incorporated herein in its entirety.

### Industrial Applicability

As explained above, the present invention can provide a network system, a node device, a data distribution method, an information recording medium, and a program that can appropriately reduce a load in data distribution.

## Claims

1. A network system, in which a server and a plurality of node devices are capable of communicating one another,
wherein the server includes:
a distribution request receiving unit (201) that receives a distribution request sent by the node devices;
a selecting unit (202) that selects at least one of the node devices which have sent the distribution request as a highest-level node device;
an introducing unit (204) that introduces the highest-level node device to each of the other node devices that are not selected; and
a distributing unit (205) that distributes data to the highest-level node device, and
wherein each of the node devices includes:
a distribution request sending unit (301) that sends a distribution request to the server;
a routing unit (302) that, when the node device, to which it belongs, is selected by the server as the highest-level node device and hence introduced by the server to the other node devices, determines a distribution route among these other node devices such that the distribution route goes from higher-level node devices to lower-level node devices, starting from the node device to which it belongs;
a data receiving unit (303) that receives the data distributed by an immediate higher-level node device, to which the node device, to which the data receiving unit (303) belongs, gains connection in accordance with the determined distribution route, or the data distributed by the server;
a data sending unit (308) that, in a case where the node device, to which it belongs, has an immediate lower-level node device, to which the node device shall gain connection in accordance with the distribution route, sends the received data to the immediate lower-level node device; and
a receipt acknowledge returning unit (309) that, in a case where the node device, to which it belongs, is a lowest-level node device as having no immediate lower-level node device in the distribution route, returns a receipt acknowledge for the data that is received by the data receiving unit (303) to the highest-level node device, upon reception of the data.

2. The network system according to claim 1,
wherein the selecting unit (202) of the server selects the node device that has sent the distribution request first as the highest-level node device, and
the routing unit (302) of the node device determines the distribution route among the other node devices, which, via introduction by the server, have accessed the node device, to which the routing unit (302) belongs, such that the distribution route goes from higher-level node devices to lower-level node devices, wherein a level of the node devices is determined in accordance with an order of access.

3. The network system according to claim 1,
wherein the node device further includes:
an address adding unit (305) that adds an address of the node device, to which it belongs, to the data received by the data receiving unit (303); and
a higher-level node managing unit (306) that manages higher-level node devices that are currently higher in level than the node device, to which it belongs, based on addresses that have already been added to the received data, and
wherein the data sending unit (308) sends the data, to which the address has been added, to the immediate lower-level node device, and
the receipt acknowledge returning unit (309) generates a list that includes all the addresses that have been added to the data received by the data receiving unit (303) and the address of the node device, to which the receipt acknowledge returning unit (309) belongs, in such a manner that the list indicates a currently existing distribution route, and returns the receipt acknowledge that includes the generated list to the highest-level node device.

4. The network system according to claim 3,
wherein the node device further includes a redistribution requesting unit (307) that, when the data receiving unit (303) becomes unable to receive data because the node device, to which the redistribution requesting unit (307) and the data receiving unit (303) belong, is disconnected from the immediate higher-level node device, tries to gain connection to the higher-level node devices managed by the higher-level node managing unit (306) in an order of lower-level ones of the managed node devices, and requests the node device, to which it has succeeded in gaining connection, to redistribute the data, and
the data receiving unit (303) regards the node device, which the redistribution requesting unit (307) has requested to redistribute the data, as a new immediate higher-level node device, and receives the data distributed by the new immediate higher-level node device.

5. The network system according to claim 1,
wherein when the node device is accessed by a new node device via introduction by the server, the routing unit (302) of the node device re-determines a distribution route, in which the new node device is a lowest-level node device.

6. A node device in a network, in which a server as a data distribution source and a plurality of such node devices are capable of communicating with one another, the node device comprising:
a distribution request sending unit (301) that sends a distribution request to the server;
a routing unit (302) that, when the node device, to which it belongs, is selected by the server as a highest-level node device and introduced by the server to other node devices, determines a distribution route among these other node devices such that the distribution route goes from higher-level node devices to lower-level node devices, starting from the node device to which it belongs;
a data receiving unit (303) that receives data that is distributed by an immediate higher-level node device to which the node device, to which the data receiving unit (303) belongs, gains connection in accordance with the determined distribution route, or data distributed by the server;
a data sending unit (308) that, in a case where the node device, to which it belongs, has an immediate lower-level node device, to which the node device shall gain connection in accordance with the distribution route, sends the received data to the immediate lower-level node device; and
a receipt acknowledge returning unit (309) that, in a case where the node device, to which it belongs, is a lowest-level node device as having no immediate lower-level node device in the distribution route, returns a receipt acknowledge for the data that is received by the data receiving unit (303) to the highest-level node device, upon reception of the data.

7. The node device according to claim 6,
wherein the server selects the node device that is first to send a distribution request to the server as the highest-level node device, and
the routing unit (302) determines the distribution route among the other node devices, which, via introduction by the server, have accessed the node device, to which the routing unit (302) belongs, such that the distribution route goes from higher-level node devices to lower-level node devices, wherein a level of the node devices is determined in accordance with an order of access.

8. The node device according to claim 6, further comprising:
an address adding unit (305) that adds an address of the node device, to which it belongs, to the data received by the data receiving unit (303); and
a higher-level node managing unit (306) that manages higher-level node devices that are currently higher in level than the node device, to which it belongs, based on addresses that have already been added to the received data, and
wherein the data sending unit (308) sends the data, to which the address has been added, to the immediate lower-level node device, and
the receipt acknowledge returning unit (309) generates a list that includes all the addresses that have been added to the data received by the data receiving unit (303) and the address of the node device, to which the receipt acknowledge returning unit (309) belongs, in such a manner that the list indicates a currently existing distribution route, and returns the receipt acknowledge that includes the generated list to the highest-level node device.

9. The node device according to claim 8, further comprising
a redistribution requesting unit (307) that, when the data receiving unit (303) becomes unable to receive data because the node device, to which the redistribution requesting unit (307) and the data receiving unit (303) belong, is disconnected from the immediate higher-level node device, tries to gain connection to the higher-level node devices managed by the higher-level node managing unit (306) in an order of lower-level ones of the managed node devices, and requests the node device, to which it has succeeded in gaining connection, to redistribute the data, and
wherein the data receiving unit (303) regards the node device, which the redistribution requesting unit (307) has requested to redistribute the data, as a new immediate higher-level node device, and receives the data distributed by the new immediate higher-level node device.

10. The node device according to claim 6,
wherein when the node device is accessed by a new node device via introduction by the server, the routing unit (302) of the node device re-determines a distribution route, in which the new node device is a lowest-level node device.

11. A data distribution method of a network system, in which a server and a plurality of node devices are capable of communicating with one another, comprising:
a distribution request receiving step, performed by the server, of receiving a distribution request sent by the node devices;
a selecting step, performed by the server, of selecting at least one of the node devices which have sent the distribution request as a highest-level node device;
an introducing step, performed by the server, of introducing the highest-level node device to each of the other node devices that are not selected;
a distributing step, performed by the server, of distributing data to the highest-level node device;
a distribution request sending step, performed by the node devices, of sending a distribution request to the server;
a routing step, performed by the node device selected by the server as the highest-level node device and hence introduced by the server to the other node devices, of determining a distribution route among these other node devices such that the distribution route goes from higher-level node devices to lower-level node devices, starting from the node device selected as the highest-level node device;
a data receiving step, performed by the node devices, of receiving the data distributed by an immediate higher-level node device, to which each node device gains connection in accordance with the determined distribution route, or the data distributed by the server;
a data sending step, performed by each node device that has an immediate lower-level node device, to which it shall gain connection in accordance with the distribution route, of sending the received data to the immediate lower-level node device; and
a receipt acknowledge returning step, performed by a node device, which is a lowest-level node device as having no immediate lower-level node device in the distribution route, of returning a receipt acknowledge for the data receipted at the data receiving step to the highest-level node device, upon reception of the data.

12. An information recording medium that stores a program controlling each of a plurality of computers in a network, in which a server as a data distribution source and the plurality of computers arc capable of communicating with one another, the program controlling the computers to function as node devices, each of which includes:
a distribution request sending unit (301) that sends a distribution request to the server;
a routing unit (302) that, when the node device, to which it belongs, is selected by the server as a highest-level node device and introduced by the server to other node devices, determines a distribution route among these other node devices such that the distribution route goes from higher-level node devices to lower-level node devices, starting from the node device to which it belongs;
a data receiving unit (303) that receives data that is distributed by an immediate higher-level node device to which the node device, to which the data receiving unit (303) belongs, gains connection in accordance with the determined distribution route, or data distributed by the server;
a data sending unit (308) that, in a case where the node device, to which it belongs, has an immediate lower-level node device, to which the node device shall gain connection in accordance with the distribution route, sends the received data to the immediate lower-level node device; and
a receipt acknowledge returning unit (309) that, in a case where the node device, to which it belongs, is a lowest-level node device as having no immediate lower-level node device in the distribution route, returns a receipt acknowledge for the data that is received by the data receiving unit (303) to the highest-level node device, upon reception of the data.

13. A program that controls each of a plurality of computers in a network, in which a server as a data distribution source and the plurality of computers are capable of communicating one another, the program controlling the computers to function as node devices, each of which includes:
a distribution request sending unit (301) that sends a distribution request to the server;
a routing unit (302) that, when the node device, to which it belongs, is selected by the server as a highest-level node device and introduced by the server to other node devices, determines a distribution route among these other node devices such that the distribution route goes from higher-level node devices to lower-level node devices, starting from the node device to which it belongs;
a data receiving unit (303) that receives data that is distributed by an immediate higher-level node device to which the node device, to which the data receiving unit (303) belongs, gains connection in accordance with the determined distribution route, or data distributed by the server;
a data sending unit (308) that, in a case where the node device, to which it belongs, has an immediate lower-level node device, to which the node device shall gain connection in accordance with the distribution route, sends the received data to the immediate lower-level node device; and
a receipt acknowledge returning unit (309) that, in a case where the node device, to which it belongs, is a lowest-level node device as having no immediate lower-level node device in the distribution route, returns a receipt acknowledge for the data that is received by the data receiving unit (303) to the highest-level node device, upon reception of the data.
